# EUROPEAN PATENT SPECIFICATION

(11) **EP 4 296 152 B1**
(45) Date of publication and mention of the grant of the patent: **17.06.2026**
(21) Application number: 22770172.9
(22) Date of filing: 14.01.2022
(51) Int. Cl.: B62K 19/38, B62L 1/00, F16D 65/092

(54) **DISC BRAKE DEVICE AND BICYCLE**
SCHEIBENBREMSENVORRICHTUNG UND FAHRRAD
DISPOSITIF DE FREIN À DISQUE ET BICYCLETTE

(30) Priority: 18.03.2021 CN 202120558303 U
(43) Date of publication of application: 27.12.2023
(73) Proprietor: Dahon Tech (Shenzhen) Co., Ltd., Shenzhen, Guangdong 518100 (CN)
(72) Inventor: HON, David Tak Wei, Shenzhen, Guangdong 518100 (CN); LI, Wenxu, Shenzhen, Guangdong 518100 (CN)
(74) Representative: Reddie & Grose LLP
(86) International application number: PCT/CN2022/071973
(87) International publication number: WO 2022/193810

(56) References cited:
- WO-A1-2014/084560
- CN-U- 201 736 737
- CN-U- 201 736 737
- CN-U- 204 628 375
- CN-U- 204 628 375
- CN-U- 214 985 873
- TW-U- M 487 053
- US-B2- 10 556 463

## Description

### TECHNICAL FIELD

The present application relates to the field of brake technology, in particular to a disc brake device and a bicycle.

### BACKGROUND

As a transportation tool, bicycle plays an important role in people's daily life. Brake mechanism is an essential component to ensure the reliable operation of the bicycle, and disc brake mechanism is widely used in the bicycle.

The disc brake mechanism includes a brake disc and a disc brake, the brake disc is connected to the wheel, and the disc brake clamps on the brake disc. When braking is required, the disc brake tightly clamps the brake disc, and the disc brake stops rotating under the friction force applied by the disc brake, so that the wheel stops rotating and the purpose of braking is achieved.

In conventional disc brake mechanism, a distance between the brake disc and an inside surface of a fork sheet is 4mm to 12mm, and a distance between the brake disc and the spokes of the wheel is relatively large, so that the disc brake and the brake disc protrude too much from a center plane of the wheel, which not only causes more waste of space in the structure, but also causes protruding portions to be likely collided to be damaged or to hurt people.

CN201736737U, which shows the preamble of claim 1, describes a disc brake spoke wheel hub structure comprising a front wheel hub and a disc brake; symmetrical disc-shaped side plates are arranged on the left and right sides of the front wheel hub, left and right circular steps are respectively arranged on the left and right side plates, the diameter of the left circular step is more than the diameter of the right circular step, a support step is arranged on the exterior of the left circular step corresponding to the inner hole of the disc brake, a mounting hole is arranged on the end surface of the left circular step, a shaft hole penetrates through the middle part of the front wheel hub, and bearing mounting slots are arranged in the left and right circular steps; the disc brake is mounted on the left circular step and is fixed in the mounting hole by bolts; a positioning sleeve and a front wheel shaft are mounted in the shaft hole, bearings are mounted in the left and right circular steps, bushings are mounted on the exteriors of the bearings, and the front wheel shaft is fixed in the corresponding hole of a front fork leg tube by nuts; and a brake of the disc brake is mounted on the left front fork leg tube corresponding to the disc brake. The disc brake spoke wheel hub structure integrates the safety of the disc brake and the characteristics of comfort and easy repairing of spoke rim to provide a better front wheel hub structure for electric bicycles. A brake disc is described which is perpendicular to the hub of the wheel.

US 10556463 B2 describes that in order to improve a wheel unit for a bicycle, comprising a hub and a wheel rim, which is arranged rotatably about an axis of rotation, wherein the hub and the wheel rim are connected to one another by spokes, it is proposed to arrange a brake disc and a sensor ring comprising a sensing region on the hub and to arrange the sensor ring adjacent to the brake disc. A brake disc is described which is perpendicular to the hub of the wheel.

CN 204628375 U describes a kind of brake disc. The described brake disc comprises: an inner disc portion onto which an outer disc is mounted which constitutes the brake rotor and braking portion of the disc. The outer disc constituting the braking portion is perpendicular to the hub of the wheel

### SUMMARY

Accordingly, it is necessary to provide a disc brake device and a bicycle that reduce space waste and are less likely to be collided to be damaged or to hurt people, to address the problem of space waste, likely being collided to be damaged or to hurt people due to a relative long distance between conventional brake disc and spokes of a wheel.

The invention is defined in the appended claims.

A disc brake device arrangement includes a disc brake device, a bicycle frame, a mounting shaft, a wheel, and a brake disc, the bicycle frame includes a frame body and a fork sheet fixedly connected to the frame body, the mounting shaft is fixedly connected to the fork sheet, the wheel includes a wheel hub, a rim, and spokes, the wheel hub is movably connected to the mounting shaft, the spokes are provided between the wheel hub and the rim, the disc brake is fixedly connected to the wheel hub, and the brake disc and the wheel are capable of rotating together relative to the mounting shaft;

the brake disc has an inner surface facing the spoke and an outer surface facing the fork sheet;

wherein a first distance in an axial direction of the mounting shaft between an edge of the inner surface of the brake disc farthest from the wheel hub in a radial direction of the mounting shaft and the spokes is less than or equal to 10mm, and/or a second distance in the axial direction of the mounting shaft between an edge of the outer surface of the brake disc farthest from the wheel hub in the radial direction of the mounting shaft and an inner surface of the fork sheet is greater than or equal to 20mm.

In one of the not claimed embodiments, the brake disc includes a mounting frame and a disc plate, and the disc plate is provided on an edge of the mounting frame along a circumferential direction of the mounting frame, in the axial direction of the mounting shaft, the entire mounting frame does not exceed an inner surface of the disc plate, the mounting frame has a wheel mounting surface located on the same side as the inner surface of the disc plate, the wheel hub abuts against the wheel mounting surface, and the wheel mounting surface is spaced apart from the inner surface of the disc plate in the axial direction of the mounting shaft.

In one of the not claimed embodiments, the disc plate is provided with a first mounting hole extending in the axial direction of the mounting shaft, a circumferential edge of the mounting frame is connected to a hole wall of the first mounting hole, or the circumferential edge of the mounting frame is connected to an end of the disc plate having the outer surface;
wherein an orthographic projection of the wheel mounting surface on a plane where the disc plate is located is within a range of an orthographic projection of the mounting hole on the plane where the disc plate is located.

In one of the not claimed embodiments, the mounting frame includes a mounting sheet and a plurality of mounting feet, one end of each of the mounting feet is connected to a circumferential edge of the mounting sheet, and the other end of each of the mounting feet is connected to the disc plate, and all of the mounting feet are spaced apart along a circumferential direction of the disc plate;
wherein the wheel mounting surface is a plane on the same side as the inner surface of the disc plate.

In one of the not claimed embodiments, the brake disc is of a flat plate structure, a side of the wheel hub facing the brake disc has a brake disc mounting surface, and the brake disc abuts against the brake disc mounting surface.

In one of the not claimed embodiments, the wheel hub includes a main body movably connected to the mounting shaft and a brake disc mounting portion connected to the main body, the spokes are provided between the main body and the rim;
wherein the brake disc mounting portion is of a multi-pointed star structure protruding from a side of the main body facing the brake disc.

In one of the embodiments, the brake disc has a braking surface, the braking surface is perpendicular to an axis of the mounting shaft, or the braking surface forms an acute angle or an obtuse angle with the axis of the mounting shaft.

In one of the not claimed embodiments, the disc brake device further includes a disc brake connected to the bicycle frame, the disc brake has a clamping opening, the disc brake clamps the brake disc through the clamping opening;
wherein the spokes are provided obliquely between the wheel hub and the rim, the disc brake has a first surface facing the spokes, and an inclination direction of the first surface is the same as an inclination direction of the spokes.

In one of the not claimed embodiments, the disc brake device further includes a disc brake connected to the bicycle frame, the disc brake has a clamping opening, the disc brake clamps the brake disc through the clamping opening;
wherein the spokes are provided obliquely between the wheel hub and the rim, the disc brake has a first surface facing the spokes, and the first surface is provided with a concave-convex structure.

A bicycle includes the disc brake device arrangement described in any one of the foregoing.

According to the bicycle provided in the embodiment, since the first distance between the edge of the inner surface of the brake disc farthest from the wheel hub and the spoke in the axial direction of the mounting shaft is less than or equal to 10mm, and /or the second distance between the edge of the outer surface of the brake disc farthest from the wheel hub and the inner surface of the fork sheet in the axial direction of the mounting shaft is greater than or equal to 20mm. Compared with the prior art, the distance between the brake disc and the spoke is reduced, the waste of space between the brake disc and the spoke is reduced, and the portion of the brake disc protruding from the center plane of the wheel is small and are less likely to be collided to be damaged or to hurt people.

### BRIEF DESCRIPTION OF THE DRAWINGS

FIG. 1 is an assembly view of a disc brake device according to an embodiment of the present application.
FIG. 2 is an exploded view of the disc brake device shown in FIG. 1.
FIG. 3 is a front view of the disc brake device shown in FIG. 1.
FIG. 4 is a front view of a partial structure of the disc brake device shown in FIG. 1.
FIG. 5 is a perspective view of the partial structure of the disc brake device shown in FIG. 4.
FIG. 6 is an exploded view of a brake disc of the disc brake device shown in FIG. 1.
FIG. 7 is an exploded view of a disc brake device according to another embodiment of the present application.
FIG. 8 is an exploded view of a disc brake device according to yet another embodiment of the present application.
FIG. 9 is an exploded view of a disc brake device according to another embodiment of the present application.
FIG. 10 is a side view of the disc brake device shown in FIG. 9.
FIG. 11 is a side view of the partial structure of the disc brake device shown in FIG. 4.
FIG. 12 is the exploded view of the partial structure of disc brake device shown in FIG. 4.
FIG. 13 is an exploded view of the disc brake of the disc brake device shown in FIG. 1 or FIG. 7.

100, disc brake device; 10, brake disc; 11, disc sheet; 113, first mounting hole; 114, first disc plate; 115, second disc plate; 12, mounting frame; 121, wheel mounting surface; 122, mounting sheet; 123, mounting foot; 124, second mounting hole; 20, disc brake; 21, clamping opening; 22, first surface; 23, concave-convex structure; 24, disc brake frame; 25, disc brake block; 30, rivet; 40, fastener; 51, fork sheet; 511, inner surface; 60, mounting shaft; 70, wheel; 71, wheel hub; 711, brake disc mounting surface; 713, brake disc mounting portion; 72, spoke; 73, rim; L1, first distance; L2, second distance.

### DETAILED DESCRIPTION OF THE EMBODIMENTS

In order to make the above objects, features and advantages of the present application clear and easier to understand, the specific embodiments of the present application are described in detail below in combination with the accompanying drawings. Many specific details are set forth in the following description to facilitate a full understanding of the present utility model. However, the present application can be implemented in many ways different from those described herein, and those skilled in the art can make similar improvements without departing from the connotation of the present application. Therefore, the present application is not limited by the specific embodiments disclosed below.

In the description of the present utility model, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which are only for the convenience of describing the present application and simplifying the description, rather than indicating or implying that the device or element must have a specific azimuth, be constructed and operated in a specific azimuth, so such terms cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present utility model, "multiple" means at least two, such as two, three, etc., unless otherwise expressly and specifically defined.

In the present invention, unless otherwise expressly specified and limited, the terms "mount", "connect", "contact", "fix" and other terms should be understood in a broad sense, for example, they can be fixed connections, removable connections, or integrated. They can be mechanical connection or electrical connection. They can be directly connected or indirectly connected through an intermediate medium. They can be the connection within two elements or the interaction relationship between two elements, unless otherwise expressly limited. For those skilled in the art, the specific meaning of the above terms in the present application can be understood according to the specific situation.

In the present invention, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

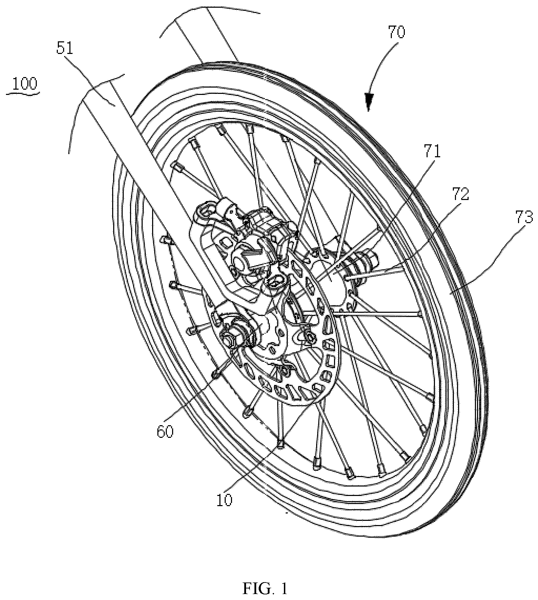

Referring to FIG. 1, an embodiment of the present application provides a bicycle including a disc brake device 100. The disc brake device 100 includes a bicycle frame, a mounting shaft 60, a wheel 70, and a brake disc 10. The bicycle frame includes frame body and a fork sheet 51 fixedly connected to the frame body, and the mounting shaft 60 is fixedly connected to the fork sheet 51. The wheel 70 includes a wheel hub 71 and a wheel body connected to each other. The wheel hub 71 is movably connected to the mounting shaft 60. Specifically, the wheel hub 71 is rotatably sleeved on the mounting shaft 60. The wheel body includes spokes 72 and a rim 73. The spokes 72 are located between the wheel hub 71 and the rim 73. The brake disc 10 is fixedly connected to the wheel hub 71, and the wheel body is capable of rotating with the wheel hub and the brake disc 10 relative to the mounting shaft.

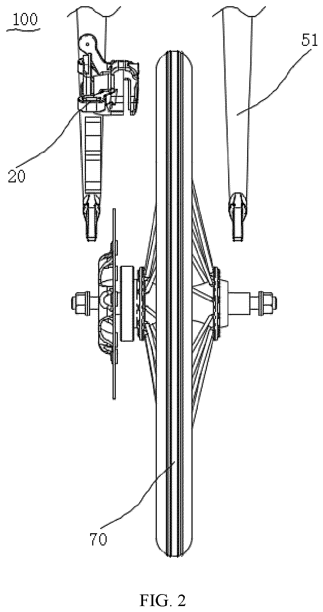

Referring to FIGS. 2 to 4, the disc brake device 100 further includes a disc brake 20 fixedly connected to the fork sheet 51. The disc brake 20 has a clamping opening 21, and the disc brake 20 clamps the brake disc 10 through the clamping opening 21. The disc brake 20 has a relaxing state of releasing the brake disc 10 and a clamping state of clamping the brake disc 10. The brake disc 10 has a braking surface. When the disc brake 20 is in the relaxing state, the disc brake 20 is separated from the braking surface of the brake disc 10, and the brake disc 10 can rotate with the wheel relative to the mounting shaft. When the disc brake 20 is in the clamping state, the disc brake 20 is tightly attached to the braking surface of the brake disc 10, and the disc brake 20 restricts the rotation of the brake disc 10, thereby restricting the rotation of the wheel and achieving the braking effect.

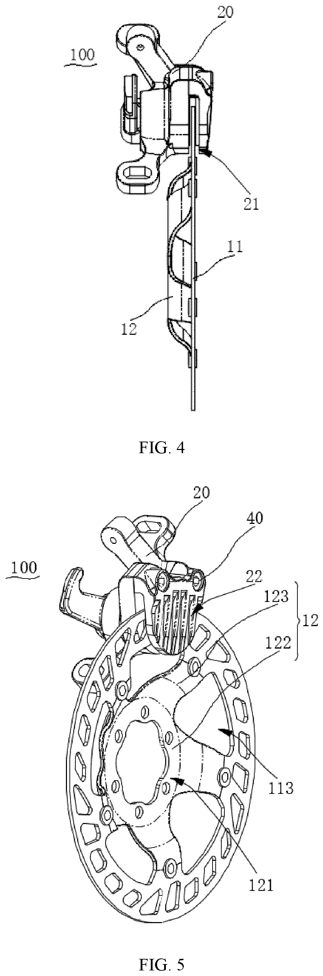

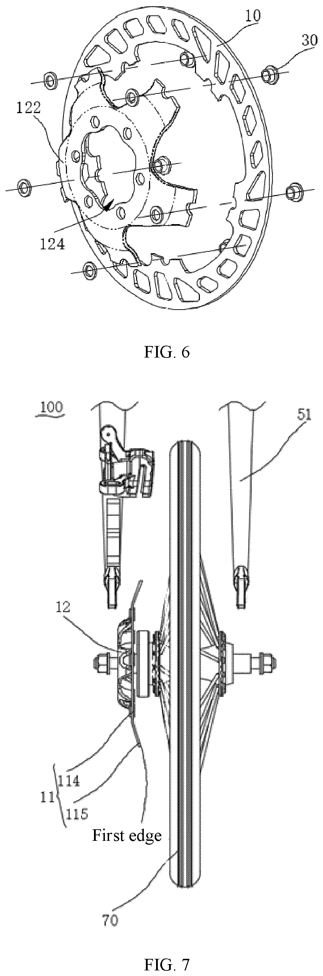

Referring to FIG. 5 and FIG. 6, the brake disc 10 has an inner surface and an outer surface that are opposite to each other. The inner surface of the brake disc 10 is provided facing the spokes 72, and the outer surface of the brake disc 10 is provided facing the fork sheet 51.

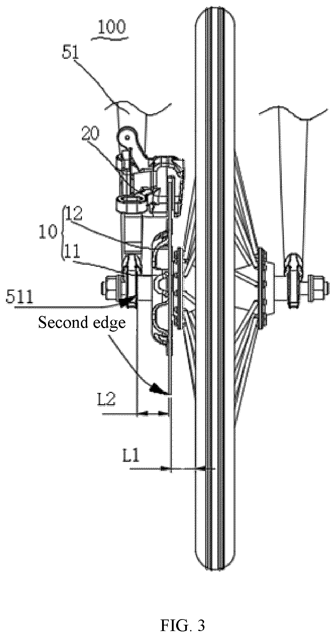

Continuing to refer to FIG. 3, a first distance L1 in an axial direction of the mounting shaft 60 between an edge of the inner surface of the brake disc 10 farthest from the wheel hub 71 in a radial direction of the mounting shaft 60 and the spoke 72 is less than or equal to 10mm, and/or a second distance L2 in the axial direction of the mounting shaft 60 between an edge of the outer surface of the brake disc 10 farthest from the wheel hub 71 in the radial direction of the mounting shaft 60 and an inner surface 511 of the fork sheet 51 is greater than or equal to 20mm.

That is, in a specific embodiment, in the radial direction of the mounting shaft 60, the inner surface of the brake disc 10 has a first edge farthest from the wheel hub 71 (see FIG. 7). In the axial direction of the mounting shaft 60, the first distance L1 between the first edge and the spoke 72 is less than or equal to 10mm. In another specific embodiment, in the radial direction of the mounting shaft 60, the outer surface of the brake disc 10 has a second edge far away from the wheel hub 71 (see FIG. 3). In the axial direction of the mounting shaft 60, the second distance L2 between the second edge and the fork sheet 51 is greater than or equal to 20mm. In yet another specific embodiment, in the radial direction of the mounting shaft 60, the inner surface of the brake disc 10 has the first edge farthest from the wheel hub 71. In the axial direction of the mounting shaft 60, the first distance L1 between the first edge and the spoke 72 is less than or equal to 10mm. At the same time, in the radial direction of the mounting shaft 60, the outer surface of the brake disc 10 has the second edge farthest from the wheel hub 71. In the axial direction of the mounting shaft 60, the second distance L2 between the second edge and the fork sheet 51 is greater than or equal to 20mm.

According to the bicycle provided in the embodiment, since the first distance L1 between the edge of the inner surface of the brake disc 10 farthest from the wheel hub 71 and the spoke 72 in the axial direction of the mounting shaft 60 is less than or equal to 10mm, and /or the second distance L2 between the edge of the outer surface of the brake disc 10 farthest from the wheel hub 71 and the inner surface of the fork sheet 51 in the axial direction of the mounting shaft 60 is greater than or equal to 20mm. Compared with the prior art, the distance between the brake disc 10 and the spoke 72 is reduced, the waste of space between the brake disc 10 and the spoke 72 is reduced, and the portion of the brake disc 10 protruding from the center plane of the wheel is small and are less likely to be collided to be damaged or to hurt people.

It should be noted that in the radial direction of the mounting shaft 60, the inner surface of the brake disc 10 has the first edge farthest from the wheel hub 71, and in the axial direction of the mounting shaft 60, the first distance L1 between the first edge and the spoke 72 may be 6mm, 7mm or 8mm, and the specific value of the first distance L1 is not limited. In the radial direction of the mounting shaft 60, the outer surface of the brake disc 10 has the second edge farthest from the wheel hub 71, and in the axial direction of the mounting shaft 60, the second distance L2 between the second edge and the fork sheet 51 may be 20 mm, 21 mm or 22 mm, and the specific value of the second distance L2 is not limited.

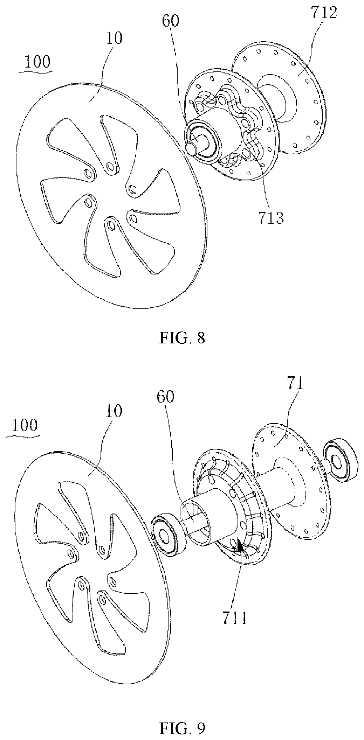

In an embodiment, referring to FIG. 8, the wheel hub 71 includes a main body 712 movably connected to the mounting shaft 60 and a brake disc mounting portion 713 connected to the main body 712, and the spokes 72 are provided between the main body 712 and the rim 73. The brake disc mounting portion 713 is of a multi-pointed star structure protruding from a side of the main body 712 facing the brake disc 10. In this way, the brake disc mounting portion 713 can reduce the weight of the wheel hub 71 on the premise of sufficient rigidity while ensuring that the brake disc 10 can be mounted, thereby ensuring the light weight of the entire disc brake device 10.

Specifically, the brake disc mounting portion 713 is of a six-pointed star structure protruding from the side of the main body 712 facing the brake disc 10. Certainly, in some other embodiments, the brake disc mounting portion 713 may also be a three-pointed star structure, a four-pointed star structure, a five-pointed star structure or a multi-pointed star structure with more than six points, which is not limited herein.

Referring to FIG. 3, FIG. 9 and FIG. 10, in an embodiment, the brake disc 10 is a flat plate structure. A side of the brake disc mounting portion 713 facing the brake disc 10 has a brake disc mounting surface 711, and the brake disc 10 abuts against the brake disc mounting surface 711. A third distance between the brake disc mounting surface 711 and the inner surface 511 of the fork sheet 51 in the axial direction of the mounting shaft 60 is greater than or equal to 20 mm. In this way, a mounting position of a bearing can be ensured to be unchanged, and the distance between the brake disc 10 and the spokes 72 is further reduced while ensuring the bending strength of the mounting shaft 60, thereby reducing the waste of space between the brake disc 10 and the spokes 72, and the portion of the brake disc 10 protruding from the central plane of the wheel is small and are less likely to be collided to be damaged or to hurt people.

It should be noted that the third distance between the brake disc mounting surface 711 and the inner surface 511 of the fork sheet 51 in the axial direction of the mounting shaft 60 may be 20 mm, 21 mm or 22 mm, and the specific value of the third distance is not limited.

Continuing to refer to FIG. 4, in another embodiment, the brake disc 10 includes a disc plate 11 and a mounting frame 12 fixedly connected to the wheel hub 71. The disc plate 11 is provided on an edge of the mounting frame 12 along a circumferential direction of the mounting shaft 60 and cooperates with the disc brake 20. The braking surface is provided on the disc plate 11, and the disc brake 20 clamps the disc plate 11 through the clamping opening 21. The disc brake 20 has a relaxing state for releasing the disc plate 11 and a clamping state for clamping the disc plate 11. When the disc brake 20 is in the relaxing state, the brake disc 10 can rotate with the wheel relative to the mounting shaft 60. When the disc brake 20 is in the clamping state, the disc brake 20 restricts the rotation of the brake disc 10, thereby restricting the rotation of the wheel and achieving the braking effect.

In an embodiment, in the axial direction of the mounting shaft 60, the entire mounting frame 12 does not exceed an inner surface of the disc plate 11 (the inner surface of the disc plate 11 is a part of the inner surface of the brake disc). That is, when defining a surface of the disc plate 11 adjacent to the wheel body as the inner surface thereof, in the axial direction of the mounting shaft 60, the entire mounting frame 12 is located outside the inner surface of the disc plate 11, or is partially coplanar with the inner surface of the disk sheet 11.

Continuing to refer to FIG. 5, further, the mounting frame 12 has a wheel mounting surface 121 located on the same side with the inner surface of disc plate 11. The wheel hub 71 abuts against the wheel mounting surface 121, and is fixedly connected to the mounting frame 12 through other fixing structures. In the axial direction of the mounting shaft 60, the wheel mounting surface 121 is spaced apart from the inner surface of the disc plate 11, that is, in the radial direction of the mounting shaft 60, the wheel mounting surface 121 is misaligned with the inner surface of the disc plate 11. In this way, the inner surface of the disc plate 11 is arranged inwardly relative to the wheel mounting surface 121. Compared with the prior art, the distance between the brake disc 10 and the wheel body is reduced, and the waste of space between the brake disc 10 and the wheel body is reduced.

In an embodiment, the mounting frame 12 is recessed toward an outer surface of the disc plate with respect to the inner surface of the disc plate 11 to form the wheel mounting surface 121, that is, the mounting frame 12 is recessed outward in a direction away from the wheel to form the wheel mounting surface 121 on the same side as the inner surface of the disc plate 11. It should be understood that, in other embodiments, the wheel mounting surface 121 may not be formed by the above-mentioned recess, but directly formed on the mounting frame 12.

Specifically, the spokes 72 are provided obliquely between the wheel hub 71 and the rim 72, and the disc plate 11 faces the spokes. When the inner surface of the disc plate 11 is provided inwardly relative to the wheel mounting surface 121, compared to the prior art, the distance between the brake disc 10 and the spokes 72 is reduced, and the waste of space between the disc brake disc 10 and the spoke 72 is reduced.

In an embodiment, the disc plate 11 is provided with a first mounting hole 113 extending through the disc plate 11 in the axial direction of the mounting shaft 60. A peripheral edge of the mounting frame 12 is connected to a hole wall of the first mounting hole 113, or the peripheral edge of the mounting frame 12 is connected to a side of the disc plate 11 having the outer surface, so that the entire mounting frame 12 does not exceed the inner surface of the disc plate 11.

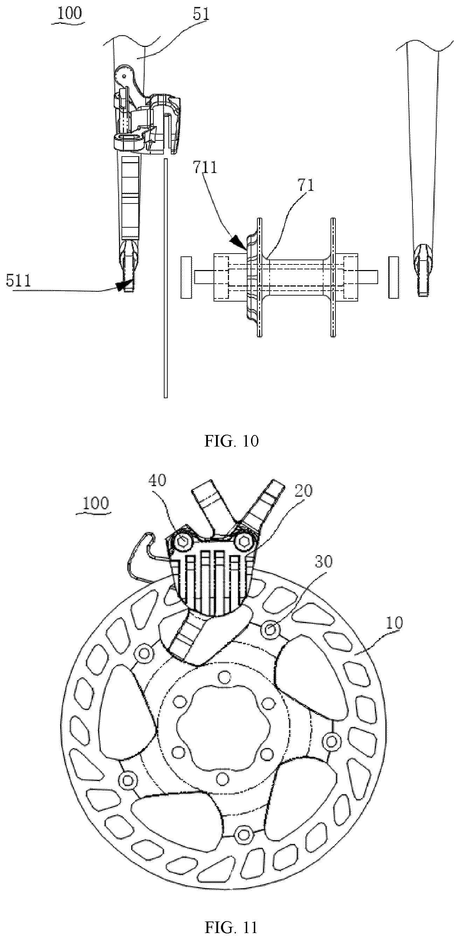

In an embodiment, the mounting frame 12 and the disc plate 11 are riveted and fixed by rivets 30 (see FIG. 11). Specifically, a circumferential edge of the mounting frame 12 is provided with a first half hole, and the hole wall of the first mounting hole 113 is provided with a second half hole. The first half hole and the second half hole are aligned to form a riveting hole, and the rivet 30 extends through the riveting hole to rivet and fix the mounting frame 12 and the disc plate 11. It should be understood that, in other embodiments, the mounting frame 12 and the disk plate 11 may be fixed by other means, such as by screws, or in other embodiments, the mounting frame 12 and the disk plate 11 may be integrally formed, which is not limited herein.

Further, a central axis of the mounting frame 12 coincides with a central axis of the disc plate 11. Certainly, in other embodiments, the central axis of the mounting frame 12 is allowed to be misaligned with the central axis of the disc plate 11.

Continuing to refer to FIG. 5, in an embodiment, the mounting frame 12 includes a mounting sheet 122 and a plurality of mounting feet 123. One end of each mounting frame 12 is connected to a circumferential edge of mounting sheet 122, the other end of each mounting frame 12 is connected to the disc plate 11. All of the mounting feet 123 are spaced apart along a circumferential direction of the disc plate 11. In this way, by adjusting length of the mounting foot 123, the distance between the wheel mounting surface 121 and the inner surface of the disc plate 11 can be adjusted.

Continuing refer to FIG. 6, specifically, the mounting sheet 122 is provided with a second mounting hole 124, and the mounting shaft 60 extends through the second mounting hole 124. The number of mounting feet 123 is five, and the mounting sheet 122 is integrally formed with the plurality of mounting feet 123. Certainly, in other embodiments, the number of the mounting feet 123 is not limited, and the mounting sheet 122 and the mounting feet 123 may also be connected through other connection structures.

Further, the disc plate 11 has a flat plate structure, and the braking surface is perpendicular to an axis of the mounting shaft 60. A plane where the mounting sheet 122 is located is parallel to a plane where the disc plate 11 is located, and is a flat surface on the same side as the inner surface of the disk sheet 11. In this way, during mounting, a contact area between the wheel mounting surface 121 and an end surface of the wheel hub 71 can be increased, thereby ensuring the firmness and stability of the mounting.

Referring to FIG. 7, in another embodiment, an acute angle or an obtuse angle is formed between the braking surface and the axis of the mounting shaft 60. The disc plate 11 includes a first disc plate 114 and a second disc plate 115. The first disc sheet 114 is fixedly connected to the mounting frame 12, and the second disc plate 115 is connected to the first disc plate 114 and is bent toward the spoke 72 relative to the first disc plate 114. Such arrangement can further reduce the distance between the disc brake disc 11 and the spokes 72, and reduce the waste of space between the brake disc 10 and the spokes 72.

In the axial direction of the mounting shaft 60, the outer surface of the disc plate 11 is located between the wheel mounting surface 121 and the inner surface of the disc plate 11. Such arrangement ensures that the entire disc plate 11 is located on an inner side of the wheel mounting surface 121, so as to prevent the sharp disc plate 11 from accidentally injuring the user, at the same time, when the bicycle is folded, the disc plate 11 can interfere with the bicycle when the bicycle is folded, and a folding volume of the folded bicycle is reduced.

Further, a thickness of the mounting frame 12 is equal to a thickness of the disc plate 11. It should be understood that, in other embodiments, the thickness of the mounting frame 12 may also be different from the thickness of the disc plate 11, which is not limited herein.

The mounting feet 123 are arranged in a curved arc shape between the mounting sheet 122 and the disc plate 11, so that the connection strength between the mounting frame 12 and the disc plate 11 can be increased. In other embodiments, the mounting foot 123 may also be flat, and the flat mounting foot 123 is obliquely connected between the mounting sheet 122 and the disc plate 11.

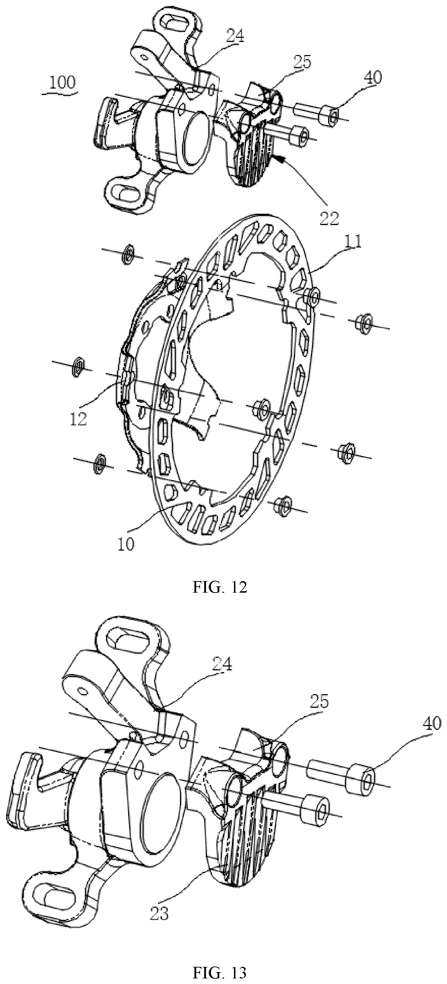

Referring to FIG. 12, in an embodiment, the disc brake 20 has a first surface 22 facing the spokes, an inclination direction of the first surface 22 is the same as an inclination direction of the spokes, so that the disc brake 20 can be placed closer to the spokes 72 of the wheel with greater strength, so that the brake disc 10 and the disc brake 20 have a better inward offset.

Referring to FIG. 13, further, the first surface 22 of the disc brake 20 is provided with a concave-convex structure 23, so that a heat dissipation area of the disc brake 20 can be increased, and the heat dissipation effect of the brake disc 10 and the disc brake 20 can be improved. The braking performance is ensured, and the service life of the brake disc 10 and the disc brake 20 is prolonged. Specifically, the first surface 22 is recessed to form a plurality of grooves, and an area without grooves forms protrusions relative to the grooves, thus forming the concave-convex structure 23. It should be understood that, in other embodiments, a plurality of protrusions may also be provided on the first surface 22, and the area without protrusions forms grooves relative to the protrusions, thus forming the concave-convex structure 23. More specifically, the grooves or protrusions are in a shape of strips arranged side by side in the same direction, or the grooves or protrusions are in a shape of dots.

The disc brake 20 includes a disc brake frame 24 and a disc brake block 25 that are separated from each other. The disc brake block 25 is connected to the disc brake frame 24 and the clamping opening 21 is formed between the two. The first surface 22 is formed on the disc brake block 25. Specifically, the disc brake block 25 is fixedly connected to the disc brake frame 24 through a fastener 40, more specifically, the fastener 40 is a screw.

Another embodiment of the application also provides a disc brake device 100 included in the above-mentioned bicycle. It should be noted here that the disc brake device 100 can also be applied to other types of vehicles besides bicycles, which is not limited herein.

## Claims

1. A disc brake device arrangement comprising a disc brake device,
a bicycle frame, a mounting shaft (60), a wheel (70), and a brake disc (10), wherein the bicycle frame comprises a frame body and a fork sheet (51) fixedly connected to the frame body, the mounting shaft (60) is fixedly connected to the fork sheet (51), the wheel (70) comprises a wheel hub (71), a rim (73), and spokes (72), the wheel hub (71) is movably connected to the mounting shaft (60), the spokes (72) are provided between the wheel hub (71) and the rim (73), the brake disc (10) is fixedly connected to the wheel hub (71), and the brake disc (10) and the wheel (70) are capable of rotating together relative to the mounting shaft (60);
the brake disc (10) has an inner surface (511) facing the spoke (72) and an outer surface facing the fork sheet (51);
wherein a first distance (L1) in an axial direction of the mounting shaft (60) between an edge of the inner surface (511) of the brake disc (10) farthest from the wheel hub (71) in a radial direction of the mounting shaft (60) and the spokes (72) is less than or equal to 10mm, and/or a second distance (L2) in the axial direction of the mounting shaft (60) between an edge of the outer surface of the brake disc (10) farthest from the wheel hub (71) in the radial direction of the mounting shaft (60) and an inner surface (511) of the fork sheet (51) is greater than or equal to 20mm;
**characterized in that**
the brake disc (10) has a braking surface, the braking surface forms an acute angle or an obtuse angle with the axis of the mounting shaft (60).

2. A bicycle, comprising the disc brake device arrangement according to claim 1.

## Patentansprüche

1. Scheibenbremsenvorrichtungsanordnung, umfassend eine Scheibenbremsenvorrichtung, einen Fahrradrahmen, eine Montagewelle (60), ein Rad (70) und eine Bremsscheibe (10), wobei der Fahrradrahmen einen Rahmenkörper und ein Gabelblech (51) umfasst, das fest mit dem Rahmenkörper verbunden ist, wobei die Montagewelle (60) fest mit dem Gabelblech (51) verbunden ist, wobei das Rad (70) eine Radnabe (71), eine Felge (73) und Speichen (72) umfasst, wobei die Radnabe (71) bewegbar mit der Montagewelle (60) verbunden ist, die Speichen (72) zwischen der Radnabe (71) und der Felge (73) bereitgestellt sind, die Bremsscheibe (10) fest mit der Radnabe (71) verbunden ist und die Bremsscheibe (10) und das Rad (70) fähig sind, zusammen in Bezug auf die Montagewelle (60) zu drehen;
wobei die Bremsscheibe (10) eine Innenfläche (511), die zu der Speiche (72) zeigt, und eine Außenfläche, die zu dem Gabelblech (51) zeigt, aufweist;
wobei ein erster Abstand (L1) in einer axialen Richtung der Montagewelle (60) zwischen einem Rand der Innenfläche (511) der Bremsscheibe (10) am weitesten von der Radnabe (71) in einer radialen Richtung der Montagewelle (60) entfernt und den Speichen (72) weniger als oder gleich 10 mm ist und/oder ein zweiter Abstand (L2) in der axialen Richtung der Montagewelle (60) zwischen einem Rand der Außenfläche der Bremsscheibe (10) am weitesten von der Radnabe (71) in der radialen Richtung der Montagewelle (60) entfernt und einer Innenfläche (511) des Gabelblechs (51) größer als oder gleich 20 mm ist; **dadurch gekennzeichnet ist, dass**
die Bremsscheibe (10) eine Bremsfläche aufweist, wobei die Bremsfläche einen spitzen Winkel oder einen stumpfen Winkel mit der Achse der Montagewelle (60) bildet.

2. Fahrrad, das die Scheibenbremsenvorrichtungsanordnung nach Anspruch 1 umfasst.

## Revendications

1. Agencement de dispositif de frein à disque comprenant un dispositif de frein à disque, un cadre de bicyclette, un axe de montage (60), une roue (70) et un disque de frein (10), dans lequel le cadre de bicyclette comprend un corps de cadre et une plaque de fourche (51) reliée fixement au corps de cadre, l'axe de montage (60) est relié fixement à la plaque de fourche (51), la roue (70) comprend un moyeu de roue (71), une jante (73) et des rayons (72), le moyeu de roue (71) est relié de manière mobile à l'axe de montage (60), les rayons (72) sont disposés entre le moyeu de roue (71) et la jante (73), le disque de frein (10) est relié fixement au moyeu de roue (71), et le disque de frein (10) et la roue (70) sont aptes à tourner ensemble par rapport à l'axe de montage (60) ;
le disque de frein (10) présente une surface interne (511) faisant face au rayon (72) et une surface externe faisant face à la plaque de fourche (51) ;
dans lequel une première distance (L1) dans une direction axiale de l'axe de montage (60) entre un bord de la surface interne (511) du disque de frein (10) le plus éloigné du moyeu de roue (71) dans une direction radiale de l'axe de montage (60) et les rayons (72) est inférieure ou égale à 10 mm, et/ou une deuxième distance (L2) dans la direction axiale de l'axe de montage (60) entre un bord de la surface externe du disque de frein (10) le plus éloigné du moyeu de roue (71) dans la direction radiale de l'axe de montage (60) et une surface interne (511) de la plaque de fourche (51) est supérieure ou égale à 20 mm ;
**caractérisé en ce que** le disque de frein (10) présente une surface de freinage, la surface de freinage forme un angle aigu ou un angle obtus avec l'axe de l'axe de montage (60).

2. Bicyclette, comprenant l'agencement de dispositif de frein à disque selon la revendication 1.
